# EUROPEAN PATENT SPECIFICATION

(11) **EP 1 898 420 B1**
(45) Date of publication and mention of the grant of the patent: **02.09.2009**
(21) Application number: 06254622.1
(22) Date of filing: 05.09.2006
(51) Int. Cl.: G11B 33/02, G11B 33/10, B60R 11/02, G11B 17/04

(54) **Portable disc player**
Tragbarer Plattenspieler
Appareil à disque portable

(43) Date of publication of application: 12.03.2008
(73) Proprietor: Alco Electronics Limited, Quarry Bay, Hong Kong Sar (CN)
(72) Inventor: Leung, Wilson Wai Sing, Quarry Bay Hong Kong SAR (CN)
(74) Representative: Martin, David John

(56) References cited:
- WO-A-20/06063261
- US-A- 4 635 110
- US-A1- 2004 218 517

## Description

The present invention relates to a portable disc player, and in particular, but not exclusively, a car seat-mounted DVD player.

### BACKGROUND OF THE INVENTION

Car seat-mounted DVD players are usually flat rectangular in shape. Whilst these players can be used elsewhere such as at home or in the office, they are not designed to stand upright stably or a special stand is used. For the top loading type, as opposed to the tray or slot loading type, the screen is often hinged and used as a lid to the disc loading bay, and this arrangement adds inconvenience to home/office use.

The invention seeks to mitigate to at least alleviate such a problem or shortcoming by providing a new or improved portable disc player.

WO 2006/063261 discloses a portable media player having a clamshell type design, including a base portion and an openable cover portion. The openable cover portion is connected to the base portion and is adapted to pivot between an upper position and a lower position.

### SUMMARY OF THE INVENTION

According to the invention, there is provided a portable disc player comprising a generally flat base unit for use in an upstanding position, a disc playing mechanism provided in the base unit, a front panel connected to the base unit, and a screen on the panel for showing video content of a disc played by the playing mechanism. The base unit has a bottom part on which the base unit operatively stands on a support surface. The disc playing mechanism has a disc loading bay on the base unit. The panel is connected to the base unit for relative pivotal movement between an upper position lying adjacent the base unit to close the loading bay and present the screen and a lower position extending from the base unit to reveal the loading bay. The panel has a bottom part that is engageable said support surface during at least part of the movement of the panel between its upper position and its lower position.

Preferably, the bottom part of the panel is configured to engage said support surface during substantially the entire movement of the panel between its upper position and its lower position.

It is preferred that the panel is pivotable about a horizontal axis and its bottom part extends equi-radially about the axis over an angle of at least 90°.

Preferably, the panel has a pair of said bottom parts on opposite left and right sides thereto.

It is preferred that the panel is hinged by its bottom part to the bottom part of the base unit.

Preferably, the panel extends in its lower position generally horizontally from the base unit to lie on said support surface, thereby counteracting rearward toppling of the base unit.

More preferably, the panel includes at least one thin protuberance on its front surface for contacting said support surface in the lower position.

More preferably, the panel includes a speaker for reproducing audio content of a disc played by the playing mechanism.

It is preferred that the base unit includes an inclined leg on its rear side for use in the upstanding position.

In a preferred embodiment, the base unit is in its Upstanding position inclined rearwardly for a small angle, and the panel rests in its upper position under its own weight against the base unit.

More preferably, a latch is provided between the panel and the base unit for latching the panel to the base unit, the latch being releasable by means of an operator provided on an upper part of the panel, by which upper part the panel is to be held for being moved to its lower position.

Further more preferably, the operator comprises a press button.

It is preferred that the base unit has a rear side provided with attaching means for attaching the entire player onto the back of a seat in a motor vehicle.

### BRIEF DESCRIPTION OF DRAWINGS

The invention will now be more particularly described, by way of example only, with reference to the accompanying drawings, in which:

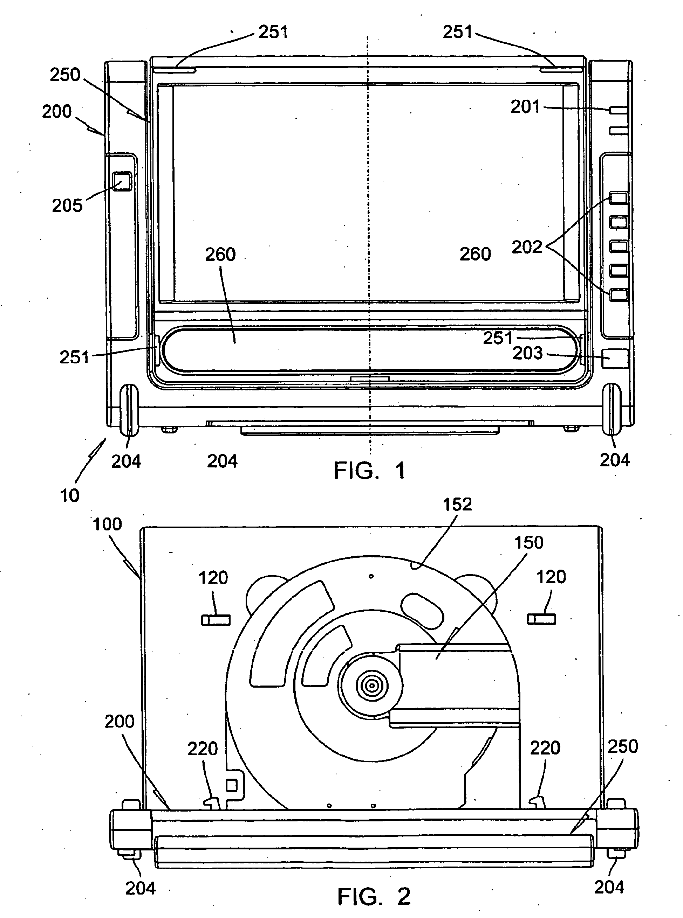

Figure 1 is a front view of an embodiment of a portable disc player in accordance with the invention;
Figure 2 is a front view of the disc player of Figure 1, having a front panel with screen thereof folded down;
Figure 3 is a right side view of the disc player of Figure 1;
Figure 4 is a right side view of the disc player of Figure 2;
Figure 5 is a perspective view illustrating how the panel of the disc player is opened; and
Figure 6 is a perspective view illustrating how the disc player is attached onto the back of a car seat.

### DSTAILED DESCRIPTION OF PREFERRED EMBODIMENT

Referring to the drawings, there is shown a portable disc player embodying the invention, in the form of a DVD player 10 which is designed primarily for use in a car but can also be used elsewhere for example at home or in the office on a desktop for example. The DVD player 10 has a generally flat rectangular base unit 100 housing therein a disc playing mechanism 150, and a rectangular front panel 200 connected to the base unit 100, which carries an LCD screen 250 with a built-in speaker 260.

The playing mechanism 150 can play most common types of video and/or audio compact discs such as DVD, DVD±R/W, VCD, CD and CD-R/W, with video content to be shown on the screen 250 and audio content reproduced by the speaker 260. A disc loading bay 152 of the playing mechanism 150 on the front side of the base unit 100 is normally closed by the panel 200.

Extending symmetrically along its bottom edge portion 110, the base unit 100 has an oblong foot plate 112 on which the base unit 100 stands up on a desktop for example, inclined or leaning rearwardly for a small angle of say about 15° to facilitate loading/unloading of discs. A small plate 130 on the rear side flips out and engages the desktop, acting as an inclined leg at the back for additional support to avoid rearward toppling of the base unit 100 while in the upstanding position. There is also an elongate integral protuberance 114 to which the front panel 200 is hinged by a bottom edge portion 210 thereof about a horizontal hinge axis x.

The front panel 200 has a large open-top central recess, partially within which the LCD screen 250 is supported for limited tilting back-to-front between -8° and +8° to allow viewing angle adjustment. From top to bottom on the right side of the panel 200 there are arranged a power indicator 201, a column of five disc playing control buttons 202 and an infrared sensor 203, whereas a press button 205 is fitted on the left side at an upper position. Power socket and on/off switch, volume dial and AV RCA sockets, etc. are arranged on opposite sides of the base unit 100. Left and right ends of the bottom edge portion 210 of the panel 100 are integrally formed with respective feet 204.

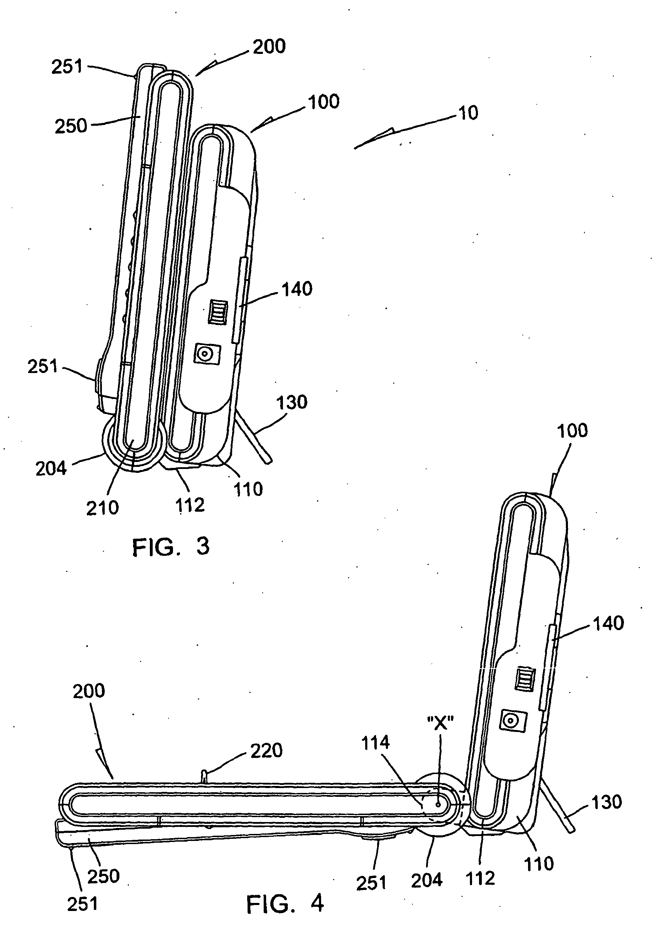

The front panel 200 is pivotable about the axis x through an angle of about 105° between an upper position (Figure 3) and a lower position (Figure 4), or at least 90° if the upper position were vertical. In the upper position, as the base unit 100 is inclined (slightly) backwards, the panel 200 rests under its own weight on and against the base unit 100, thereby closing the disc loading bay 152 and presenting the LCD screen 250. In the lower position, the panel 200 extends generally horizontally from the base unit 100 and rests on the desktop, revealing the disc loading bay 152.

There is a pair of hooks 220 on the rear surface of the front panel 200 for engaging respective aligned holes 120 in the front surface of the base unit 100 to latch the front panel 200 close to the base unit 100. Whilst the hooks 220 are apring-loaded for snap engagement with the holes 120, they are coupled with the press button 205 for movement thereby in the opposite direction to disengage from the holes 120, whereby the panel 200 is released from the base unit 100.

The two feet 204 of the front panel 200 resemble a wheel though non-rotatable, each having a periphery that extends equi-radially about the axis x through almost a complete circle. The feet 204 are configured such that they engage the desktop during substantially the entire movement of the panel 200 between its upper position and its lower position. As the two panel positions are at least 90° apart, the feet 204 (or their peripheries) should extend over an angle of at least 90°, i.e. at least a quarter of a circle, to cover the range of pivoting of the panel 200.

The front panel 200 is relatively heavy by reason of the existence of the LCD screen 250 together with the speaker 260. As a result of its feet 204 maintaining contact with the desktop, the panel 200 will receive support from the desktop continuously while it is being pivoted up or down, without any risk of toppling the base unit 100. Although the feet 204 may not always engage the support surface due to manufacturing tolerance, so long as they engage the support surface during at least part of the pivotal movement of the panel 200, the panel 200 will find ground support at some moment(s) and this would be adequate.

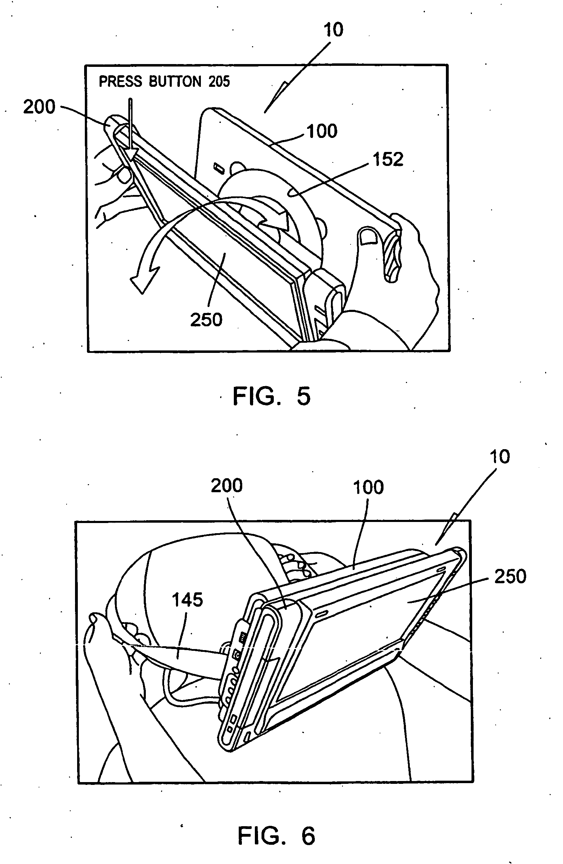

As shown in Figure 5, to open the front panel 200, a user should first grip the upper left corner of the panel 200 by his/her left hand and then pivot the panel 200 out while pressing the release button 205 (releasing the latches 220/120) and finally lower the panel 200 to the desktop. The panel 200 may be pivoted up and latched back into position for disc playing. Holding of the base unit 100 by the right hand is optional.

In its lower position, the front panel 200 lies generally flat on the desktop at a position farthest from the base unit 100, and this counteracts rearward toppling of the base unit 100 (which leans backwards). The panel 200 is designed to contact the desktop by the screen 250, which has four thin ribs 251 on its front surface at respective corners for this purpose.

The base unit 100 includes a pair of loops 140 on opposite sides, through which a strap 145 may pass for attaching the DVD player 10 onto a front seat in a car behind the headrest for use by the passengers.

The invention has been given by way of example only, and various modifications of and/or alterations to the described embodiment may be made by persons skilled in the art without departing from the scope of the invention as specified in the appended claims.

## Claims

1. A portable disc player (10) comprising:
a generally flat base unit (100) for use in an upstanding position, the base unit having a bottom part (110) on which the base unit operatively stands on a support surface;
a disc playing mechanism (150) provided in the base unit, having a disc loading bay (152) on the base unit:
a front panel hingedly (200) connected to the bottom part (110) of the base unit; and
a screen (250) on the panel for showing video content of a disc played by the playing mechanism;
the panel is connected to the base unit for relative pivotal movement between an upper position lying adjacent the base unit to close the loading bay and present the screen and a lower position extending from the base unit to reveal the loading bay,
**characterised in that** the panel having a bottom part (204) that is configured to maintain the contact with said support surface when the front panel is in said upper position and during at least part of the movement of the panel between its upper position and its lower position.

2. The portable disc player (10) as claimed in claim 1, **characterized in that** the bottom part (204) of the panel (200) is configured to maintain the contact with said support surface during substantially the entire movement of the panel between its upper position and its lower position.

3. The portable disc player as claimed in claim 1, **characterized in that** the panel (200) is pivotable about a horizontal axis (x) and the periphery of its bottom part extends equi-radially about the axis (x) over an angle of at least 90°.

4. The portable disc player (10) as claimed in claim 1, **characterized in that** the panel (200) has a pair of said bottom parts (204) on opposite left and right sides thereto.

5. The portable disc player (10) as claimed in any one of claims 1 to 4, **characterized in that** the panel (200) extends in its lower position generally horizontally from the base unit (100) to lie on said support surface, thereby counteracting rearward toppling of the base unit.

6. The portable disc player (10) as claimed in claim 5, **characterized in that** the panel (200) includes at least one thin protuberance (251) on its front surface for contacting said support surface in the lower position.

7. The portable disc player (10) as claimed in claim 5, **characterized in that** the panel (200) includes a speaker (260) for reproducing audio content of a disc played by the playing mechanism (150).

8. The portable disc player (10) as claimed in any one of claims 1 to 4, **characterized in that** the base unit (100) includes an inclined leg (130) on its rear side for use in the upstanding position.

9. The portable disc player (10) as claimed in any one of claims 1 to 4, **characterized in that** the base unit (100) is in its upstanding position inclined rearwardly for a small angle, and the panel (200) rests in its upper position under its own weight against the base unit.

10. The portable disc player (10) as claimed in claim 9, **characterized in that** a latch (120,220) is provided between the panel (200) and the base unit (100) for latching the panel to the base unit, the latch being releasable by means of an operator (205) provided on an upper part of the panel, by which upper part the panel is to be held for being moved to its lower position.

11. The portable disc player (10), as claimed in claim 10, **characterized in that** the operator (205) comprises a press button.

12. The portable disc player (10) as claimed in any one of claim 1 to 4, **characterized in that** the base unit (100) has a rear side provided with attaching means (140) for attaching the entire player onto the back of a seat in a motor vehicle.

## Patentansprüche

1. Tragbarer Plattenspieler (10), umfassend:
eine im Allgemeinen flache Basiseinheit (100) zur Verwendung in einer aufrecht stehenden Position, wobei die Basiseinheit einen unteren Teil (110) aufweist, auf dem die Basiseinheit im Betrieb auf einer tragenden Oberfläche steht;
einen Platten-Abspielmechanismus (150), der in der Basiseinheit bereitgestellt wird, mit einem Platten-Ladefach (152) an der Basiseinheit;
eine vordere Tafel (200), die gelenkig mit dem unteren Teil (110) der Basiseinheit verbunden ist; und
einen Bildschirm (250) an der Tafel zum Anzeigen von Videoinhalt einer Platte, die von dem Abspielmechanismus abgespielt wird;
wobei die Tafel für relative Schwenkbewegung zwischen einer oberen Position, die angrenzend an der Basiseinheit liegt, um das Ladefach zu schließen und den Bildschirm zu präsentieren, und einer unteren Position, die sich von der Basiseinheit erstreckt, um das Ladefach freizugeben, mit der Basiseinheit verbunden ist, **dadurch gekennzeichnet, dass** die Tafel einen unteren Teil (204) aufweist, der konfiguriert ist, um den Kontakt mit der tragenden Oberfläche zu halten, wenn die vordere Tafel in der oberen Position ist, und während zumindest Teil der Bewegung der Tafel zwischen ihrer oberen Position und ihrer unteren Position.

2. Tragbarer Plattenspieler (10) nach Anspruch 1, **dadurch gekennzeichnet, dass** der untere Teil (204) der Tafel (200) konfiguriert ist, um den Kontakt mit der tragenden Oberfläche während im Wesentlichen der gesamten Bewegung der Tafel zwischen ihrer oberen Position und ihrer unteren Position zu halten.

3. Tragbarer Plattenspieler nach Anspruch 1, **dadurch gekennzeichnet, dass** die Tafel (200) um eine horizontale Achse (x) schwenkbar ist und die Peripherie ihres unteren Teils sich gleichmäßig strahlenförmig um die Achse (x) über einen Winkel von mindestens 90° erstreckt.

4. Tragbarer Plattenspieler (10) nach Anspruch 1, **dadurch gekennzeichnet, dass** die Tafel (200) ein Paar der unteren Teile (204) an gegenüberliegenden linken und rechten Seiten dazu aufweist.

5. Tragbarer Plattenspieler (10) nach einem der Ansprüche 1 bis 4, **dadurch gekennzeichnet, dass** die Tafel (200) sich in ihrer unteren Position im Allgemeinen horizontal von der Basiseinheit (100) erstreckt, um auf der tragenden Oberfläche zu liegen, wobei sie einem Umkippen der Basiseinheit nach hinten entgegenwirkt.

6. Tragbarer Plattenspieler (10) nach Anspruch 5, **dadurch gekennzeichnet, dass** die Tafel (200) mindestens einen dünnen Vorsprung (251) an ihrer vorderen Oberfläche zum Berühren der tragenden Oberfläche in der unteren Position enthält.

7. Tragbarer Plattenspieler (10) nach Anspruch 5; **dadurch gekennzeichnet, dass** die Tafel (200) einen Lautsprecher (260) zum Reproduzieren von Audioinhalt einer Platte, die von dem Abspielmechanismus *(150)* abgespielt wird, enthält.

8. Tragbarer Plattenspieler (10) nach einem der Ansprüche 1 bis 4, **dadurch gekennzeichnet, dass** die Basiseinheit (100) ein geneigtes Bein (130) an ihrer Rückseite zur Verwendung in der aufrecht stehenden Position enthält.

9. Tragbarer Plattenspieler (10) nach einem der Ansprüche 1 bis 4, **dadurch gekennzeichnet, dass** die Basiseinheit (100) in ihrer aufrecht stehenden Position um einen kleinen Winkel nach hinten geneigt ist und die Tafel (200) in ihrer oberen Position unter ihrem eigenen Gewicht gegen die Basiseinheit aufliegt.

10. Tragbarer Plattenspieler (10) nach Anspruch 9, **dadurch gekennzeichnet, dass** eine Verriegelung (120, 220) zwischen der Tafel (200) und der Basiseinheit (100) zum Verriegeln der Tafel mit der Basiseinheit vorgesehen ist, wobei die Verriegelung mittels eines Betätigungsglieds (205), das an einem oberen Teil der Tafel, an dem der obere Teil der Tafel zum Bewegen in ihre untere Position zu halten ist, vorgesehen ist, lösbar ist.

11. Tragbarer Plattenspieler (10) nach Anspruch 10, **dadurch gekennzeichnet, dass** das Betätigungsglied (205) einen Druckknopf umfasst.

12. Tragbarer Plattenspieler (10) nach einem der Ansprüche 1 bis 4, **dadurch gekennzeichnet, dass** die Basiseinheit (100) eine Rückseite aufweist, die mit einem Befestigungsmittel (140) zum Befestigen des gesamten Spielers an die Rückseite eines Sitzes in einem Motorfahrzeug versehen ist.

## Revendications

1. Lecteur de disque portable (10) comprenant :
une unité de base (100) généralement plate destinée à être utilisée dans une position verticale, l'unité de base comportant une partie de fond (110) sur laquelle l'unité de base est positionnée en fonctionnement sur une surface de support ;
un mécanisme de lecture de disque (150) prévu dans l'unité de base, comportant une baie de chargement de disque (152) sur l'unité de base ;
un panneau avant (200) relié de manière articulée à la partie de fond (110) de l'unité de base ; et
un écran (250) sur le panneau pour présenter le contenu vidéo d'un disque lu par le mécanisme de lecture ;
le panneau étant relié à l'unité de base pour effectuer un mouvement de pivotement relatif entre une position supérieure où il est adjacent à l'unité de base pour fermer la baie de chargement et présenter l'écran et une position inférieure où il s'étend de l'unité de base pour révéler la baie de chargement,
**caractérisé en ce que**
le panneau comporte une partie de fond (204) qui est configurée pour maintenir le contact avec ladite surface de support lorsque le panneau avant est à ladite position supérieure et pendant au moins une partie du mouvement du panneau entre sa position supérieure et sa position inférieure.

2. Lecteur de disque portable (10) selon la revendication 1, **caractérisé en ce que** la partie de fond (204) du panneau (200) est configurée pour maintenir le contact avec ladite surface de support pendant le mouvement sensiblement entier du panneau entre sa position supérieure et sa position inférieure.

3. Lecteur de disque portable selon la revendication 1, **caractérisé en ce que** le panneau (200) est capable de pivoter autour d'un axe horizontal (x) et la périphérie de sa partie de fond s'étend équiradialement autour de l'axe (x) sur un angle d'au moins 90°.

4. Lecteur de disque portable (10) selon la revendication 1, **caractérisé en ce que** le panneau (200) comporte une paire desdites parties de fond (204) sur ses côtés gauche et droit opposés.

5. Lecteur de disque portable (10) selon l'une quelconque des revendications 1 à 4, **caractérisé en ce que** le panneau (200) s'étend à sa position inférieure généralement horizontalement de l'unité de base (100) pour se trouver sur ladite surface de support, contrebalançant de ce fait un basculement vers l'arrière de l'unité de base.

6. Lecteur de disque portable (10) selon la revendication 5, **caractérisé en ce que** le panneau (200) comprend au moins une mince protubérance (251) sur sa surface avant pour venir en contact avec ladite surface de support à la position inférieure.

7. Lecteur de disque portable (10) selon la revendication 5, **caractérisé en ce que** le panneau (200) comprend un haut-parleur (260) pour reproduire le contenu audio d'un disque lu par le mécanisme de lecture (150).

8. Lecteur de disque portable (10) selon l'une quelconque des revendications 1 à 4, **caractérisé en ce que** l'unité de base (100) comprend un pied (130) incliné sur son côté arrière destiné à être utilisé dans la position verticale.

9. Lecteur de disque portable (10) selon l'une quelconque des revendications 1 à 4, **caractérisé en ce que** l'unité de base (100) est dans sa position verticale inclinée vers l'arrière selon un petit angle, et le panneau (200) repose à sa position supérieure sous son propre poids contre l'unité de base.

10. Lecteur de disque portable (10) selon la revendication 9, **caractérisé en ce qu'**un cliquet (120, 220) est prévu entre le panneau (200) et l'unité de base (100) pour accrocher le panneau à l'unité de base, le cliquet étant libérable par un actionneur (205) prévu sur une partie supérieure du panneau, par laquelle partie supérieure le panneau doit être maintenu pour être déplacé à sa position inférieure.

11. Lecteur de disque portable (10) selon la revendication 10, **caractérisé en ce que** l'actionneur (205) comprend un bouton-poussoir.

12. Lecteur de disque portable (10) selon l'une quelconque des revendications 1 à 4, **caractérisé en** cé que l'unité de base (100) comporte un côté arrière pourvu de moyens de fixation (140) pour fixer le lecteur entier sur l'arrière d'un siège dans un véhicule automobile.
